# EUROPÄISCHE PATENTSCHRIFT

(11) **EP 0 722 802 B1**
(45) Veröffentlichungstag und Bekanntmachung des Hinweises auf die Patenterteilung: **11.11.1998**
(21) Anmeldenummer: 95119938.9
(22) Anmeldetag: 18.12.1995
(51) Int. Cl.: B23D 51/10

(54) **Vorrichtung zur Aufnahme eines einendig einspannbaren Sägeblattes**
Device for holding a sawblade to be clamped at one of its ends
Dispositif pour recevoir une lame de scie abloquable par une seule extrémité

(30) Priorität: 20.01.1995 DE 19501635
(43) Veröffentlichungstag der Anmeldung: 24.07.1996
(73) Patentinhaber: Metabowerke GmbH & Co., D-72622 Nürtingen (DE)
(72) Erfinder: Seyerle, Jörg, Dipl.-Ing., D-73257 Köngen (DE)
(74) Vertreter: Elbertzhagen, Otto

(56) Entgegenhaltungen:
- EP-A- 0 339 357
- DE-A- 3 030 855
- DE-A- 3 118 759
- FR-A- 2 361 189
- GB-A- 2 192 363

## Beschreibung

Die Erfindung bezieht sich auf eine Vorrichtung zur Aufnahme des Spannendes eines einendig einspannbaren, hin- und herbeweglichen Sägeblattes der im Gattungsbegriff des Patentanspruchs 1 näher bezeichneten Art.

Eine solche Spannvorrichtung ist aus der DE 30 06 299 A1 bekannt. Dort wird der Spannkörper von einer Hülse umgeben, die gegenüber der Sägeblattaufnahme verdrehbar ist und an ihrer Innenseite die Exzenterkurve aufweist. An dieser Exzenterkurve stützt sich ein Spannbacken ab, der als Spannglied quer zur Sägeblattaufnahme über die Exzenterkurve durch Verdrehen der Hülse verschieblich ist. Die Aufbringung einer ausreichenden Spannkraft für das Sägeblatt ist bei der bekannten Spannvorrichtung problematisch, so kann sich dort insbesondere bei den auftretenden Vibrationen die Spannhülse zurückdrehen und sich das Sägeblatt lösen.

Es ist ferner eine Aufnahmevorrichtung für das Spannende eines Sägeblattes bekannt, die mit einem zweiarmigen Hebel ausgestattet ist, vgl. US 3,555,678. Dort sitzt an dem kürzeren Hebelarm zumindest ein Zapfen, der formschlüssig in eine entsprechende Aussparung am Spannende des Sägeblattes eingreift. Eine ähnliche Spannvorrichtung geht aus der EP 0 582 326 A1 hervor, hier ist das Spannglied an einem schwenkbaren Körper angeordnet, welcher mittels eines in einer Kulisse geführten Betätigungsgliedes in seiner Spannstellung festgeklemmt werden kann. Eine unmittelbare Beaufschlagung gung des Spannendes des Sägeblattes mittels eines reibschlüssigen Spanngliedes ist bei diesen bekannten Vorrichtungen nicht vorgesehen.

In der F-A-2 361 189 ist eine maschinelle Säge mit einer Spannvorrichtung für ein Sägeblatt beschrieben, welches in Richtung seiner Ebene hin- und hergeschwenkt wird. Die Spannvorrichtung weist hier einen Exzenterhebel auf, über dessen Exzenterkurve und ein Zwischenglied das Spannende des Sägeblattes gegen einen Spannkörper gepreßt wird. Anders als bei einem Sägeblatt, das mit Hub in seiner Längsrichtung maschinell hin- und herbewegt wird, wie es bei dem Sägeblatt einer Stichsäge der Fall ist, werden dort auf den Spannhebel keine großen Beschleunigungskräfte übertragen. Eine Kollision mit dem Maschinengehäuse wird bei der bekannten Ausführung durch eine Kröpfung des Spannhebels vermieden.

Aufgabe der vorliegenden Erfindung ist es, eine Spannvorrichtung der gattungsgemäßen Art zu schaffen, bei der von Hand hohe Spannkräfte einfach aufgebracht werden können und bei der auch bei hohen Beschleunigungskräften in Hubrichtung aufgrund der Anordnung des Spannhebels sowie der darüber aufbringbaren, hohen Reibkräfte ein selbstätiges Lösen des Sägeblattes unterbunden ist.

Diese Aufgabe wird bei einer gattungsbildenden Vorrichtung nach der Erfindung durch die kennzeichnenden Merkmale des Patentanspruchs 1 gelöst.

Für die Erfindung ist die Ausbildung des Spanngliedes als zweiarmiger Hebel wesentlich, wobei es die Hebelübersetzung zwischen dem kürzeren Innenarm und dem längeren, zu betätigenden Außenarm ermöglicht, über die das Einspannende des Sägeblattes unmittelbar beaufschlagende Exzenterkurve hohe Spannkräfte aufzubringen, wodurch sich die Spannvorrichtung selbst sichert und ein Lösen des Sägeblattes nicht auftritt. Die Krümmung des längeren Außenarms des zweiarmigen Spannhebels in Umfangsrichtung des Spannkörpers vermeidet störende Überstände auch dann, wenn aufgrund der Beaufschlagung eines dickeren Sägeblattes der gebogene Außenarm des Spannhebels nicht bis dicht an den Spannkörper heran in der Klemmlage geschwenkt werden kann. Somit ist es mit der erfindungsgemäßen Spannvorrichtung erreicht, ein einendig einspannbares Sägeblatt, wie insbesondere das Sägeblatt einer Stichsäge, auf besonders einfache und wirkungsvolle Weise werkzeuglos spannen zu können.

Vorteilhafte Ausgestaltungsmerkmale der Erfindung ergeben sich aus den Unteransprüchen. Hier ist insbesondere die Beaufschlagung des zweiarmigen Spannhebels durch eine Feder hervorzuheben, die in Spannrichtung wirkt.

Vor allem bei Anlenkung dieser Feder als Zugfeder am Griffende des Außenarms des Spannhebels wird die Hebelübersetzung für die Verstärkung der Federkraft genutzt, durch die sich eine erhöhte Spannkraft am Stirnende des kürzeren Innenarms des Spannhebels ergibt.

Die Erfindung wird nachfolgend anhand der Zeichnung an einem Ausführungsbeispiel noch näher erläutert. Dabei zeigen:
- Fig. 1: eine perspektivische Ansicht einer Spannvorrichtung für ein Stichsägeblatt und
- Fig. 2: einen Querschnitt durch die Spannvorrichtung nach Fig. 1 in Höhe der Spannstelle des Stichsägeblattes.

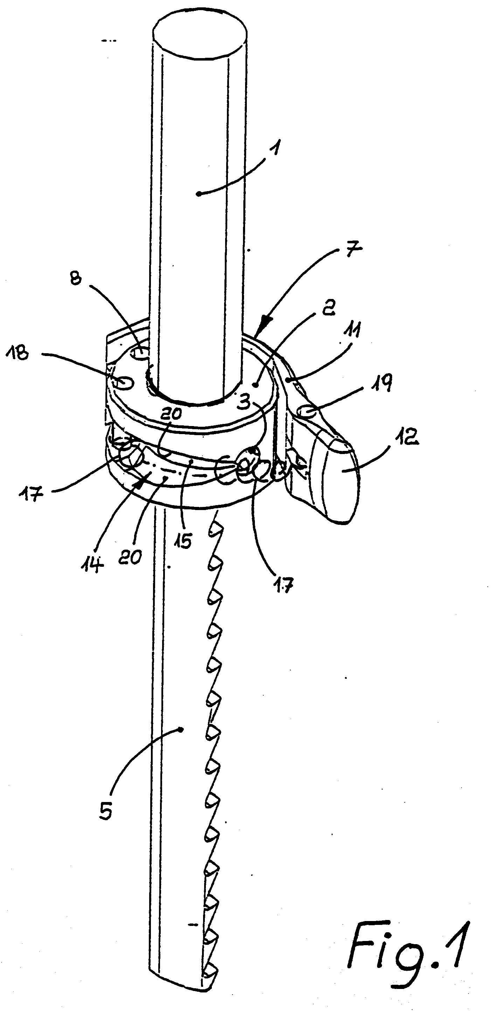

Im einzelnen zeigt Fig. 1 den Stößel 1 einer Stichsäge, an dessen Unterende eine werkzeuglos spannbare Aufnahme für das Einspannende eines Stichsägeblattes 5 angeordnet ist, die einen mittels eines Spannstiftes 3 mit dem Stößel 1 verbundenen Spannkörper 2 aufweist. Das Stichsägeblatt 5 wird am Einspannende so in der Spannvorrichtung fixiert, daß es im wesentlichen in der Diametralebene des Stößels 1 liegt. Der Spannkörper 2 hat eine zylindrische Hüllform, die koaxial zum Stößel 1 ist.

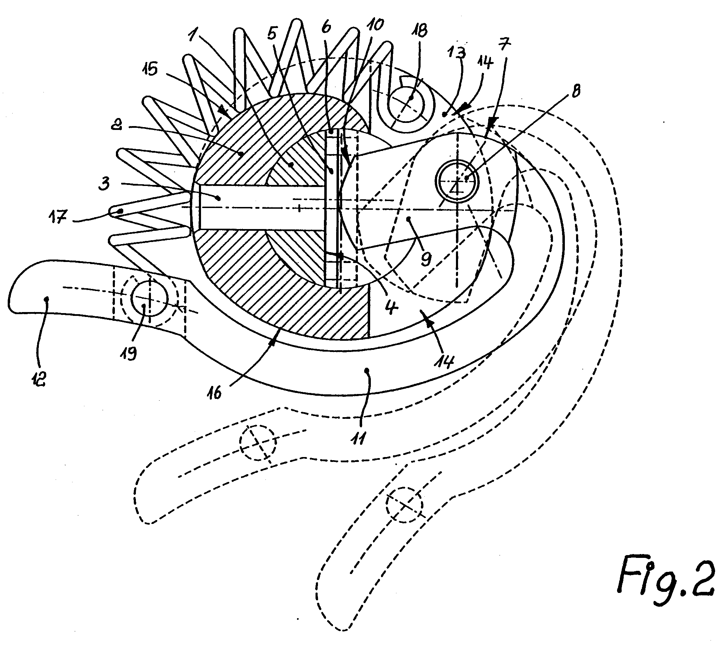

Wie man Fig. 2 weiter entnimmt, ist etwa in der Diametralebene dieser zylindrischen Hüllform des Spannkörpers 2 und damit in der Diametralebene des Stößels 1 am letzteren eine Anlagefläche 4 gebildet, gegen die das Einspannende des Sägeblattes 5 zur Anlage gebracht werden kann, wo nach es in Eingriff mit Formschlußkonturen 6 steht, die das Sägeblatt in seiner Spannlage bei Anlage an der Anlagefläche 4 gegen ein Verschieben in Hubrichtung sichern.

Die Verspannung des Einspannendes des Sägeblattes 5 gegen die Anlagefläche 4 erfolgt mittels eines Spanngliedes in Gestalt eines zweiarmigen Hebels 7, der an einem eine Schwenkachse 8 bildenden Lagerbolzen gelagert ist. Die Schwenkachse 8 des Hebels 7 ist mit Abstand gegenüber der Anlagefläche 4 parallel zur Hubachse angeordnet, und von der Schwenkachse 8 aus erstreckt sich in das Innere des Spannkörpers 2 hinein ein Innenarm 9 des Hebels 7, der an seinem Innenende eine Exzenterkurve 10 hat. Durch Verschwenken des Hebels 7 um die Schwenkachse 8 kann dessen Innenarm 9 mit der Exzenterkurve 10, deren Exzentrizität auf die Schwenkachse 8 bezogen ist, in Anlage am Einspannende des Sägeblattes 5 gebracht werden, wobei über den Innenarm 9 und das Einspannende des Sägeblattes 5 zwischen der Schwenkachse 8 und der Anlagefläche 4 eine Verspannung entsteht, deren Kraft sich über den Spannkörper 2 schließt.

Der Hebel 7 weist ferner einen Außenarm 11 auf, dessen Wirklänge wesentlich größer als die des Innenarms 9 des Hebels 7 ist. Unmittelbar von der Schwenkachse 8 aus nach außen hin verläuft der Außenarm 11 mit einer stärkeren Krümmung, um daran anschließend eine Bogenform einzunehmen, die an die Außenrundung des Spannkörpers 2 angepaßt ist. Somit verläuft der schwächer gekrümmte Bereich des Außenarms 11 des Hebels 7 bei Spannen eines dünneren Sägeblattes 5 etwa konzentrisch zur Hubachse, wie es die Darstellung des Hebels 7 in ausgezogenen Linien in Fig. 2 wiedergibt. Beim Spannen eines dickeren Sägeblattes nimmt der Hebel 7 diejenige Lage ein, die in Fig. 2 der inneren Darstellung in gestrichten Linien entspricht. Die Offenlage des Hebels 7, in der der kürzere Innenarm 9 von der Anlagefläche 4 so weit weggeschwenkt ist, daß das Sägeblatt 5 ausgestauscht werden kann, ist in Fig. 2 durch die äußere Darstellung in gestrichten Linien angedeutet.

Der insgesamt etwa C-förmige Hebel 4 hat ein freies Griffende 12, welches entgegen der C-Krümmung leicht nach außen hin abgewinkelt ist, so kann man auch in der nahezu am Spannkörper 2 anliegenden Lage das Griffende 12 leicht erfassen.

Wie Fig. 1 deutlich macht, hat der Spannkörper 2 einen in Umfangsrichtung verlaufenden, symmetrisch zu seiner mittigen Querschnittsebene ausgebildeten Einschnitt 14, dessen Flanken im tieferen Endbereich von Radialflächen 13 gebildet werden. Zwischen den beiden einander gegenüberliegenden Radialflächen 13 des Einschnittes 14 ist der in den Spannkörper 2 eintauchende Teil des Hebels 7, insbesondere dessen kürzerer Innenarm 9 angeordnet, wobei die Schwenkachse 8 für den Hebel 7 den Einschnitt 14 überbrückt. Der sich etwa über den halben Umfang des Spannkörpers 2 erstreckende, nutförmige Einschnitt 14 hat außerhalb des Schwenkbereichs des Hebels 7 einen geneigten Grund 15, der von der tiefsten Stelle allmählich bis zur Umfangsseite des Spannkörpers 2 ansteigt. In diesem Bereich des Einschnittes 14, der auf der vom längeren Außenarm 11 abliegenden Umfangseite des Spannkörpers 2 angeordnet ist und der hier durch gegenüber der Radialrichtung geschrägte Flanken 20 begrenzt sein kann, ist eine Zugfeder 17 angeordnet, die mit ihrem Innenende an einem Bolzen 18 festgelegt ist, der benachbart der Schwenkachse 8 ebenfalls den Einschnitt 14 des Spannkörpers 2 überbrückt. Die von da ab dem ansteigenden Grund 15 des Einschnittes 14 folgende Feder 17 ist mit ihrem anderen Ende am Außenarm 11 des Hebels 7 nahe dem Griffende 12 angelenkt, indem sie dort ebenfalls in einen Bolzen 19 oder dergleichen eingehängt ist. Die Zugfeder 17 ist bestrebt, den Hebel 7 stets in der Spannstellung zu halten, sie unterstützt somit, übersetzt über den längeren Außenarm 11 und den kürzeren Innenarm 9 des Hebels 7 die Spannkraft, was insbesondere bei den auftretenden Vibrationen im Betrieb eine zusätzliche Sicherung darstellt. Im übrigen stört die Zugfeder 17 die Beweglichkeit des Hebels 7 nicht, weil sie auf der vom Außenarm 11 des Hebels 7 abgelegenen Umfangsseite des Spannkörpers 2 angeordnet ist.

## Patentansprüche

1. Vorrichtung zur Aufnahme des Spannendes eines einendig einspannbaren, hin- und herbeweglichen Sägeblattes (5), wie das einer Stichsäge, mit einer mit benachbarten oder eingeformten Formschlußkonturen versehenen Anlagefläche (4) in einem Spannkörper (2), gegen die das Spannende des Sägeblattes (5) mittels eines am Spannkörper (2) gelagerten Spanngliedes (7) und einer Exzenterkurve (10) verspannbar ist,
dadurch gekennzeichnet,
daß das Spannglied (7) ein zweiarmiger Hebel mit einem kürzeren Innenarm (9) und mit einem längeren, in Umfangsrichtung des Spannkörpers (2) gebogenen Außenarm (11) mit einem freien Griffende (12) ist, daß die Schwenkachse (8) des Spanngliedes (7) mit der Hubachse des Spannkörpers (2) parallel ist und daß am Stirnende des kürzeren Innenarms (9) des Spanngliedes (7) die Exzenterkurve (10) angeordnet ist, welche in der Spannlage das Spannende des Stichsägeblattes (5) unmittelbar beaufschlagt.

2. Vorrichtung nach Anspruch 1,
dadurch gekennzeichnet,
daß der Spannkörper (2) eine zylindrische Hüllform hat und die Anlagefläche (4) etwa in einer Diametralebene dieser Hüllform liegt, wobei der Hebel (7) gegenüber der Anlagefläche (4) am Spannkörper (2) nahe dessen Umfangsseite gelagert ist.

3. Vorrichtung nach Anspruch 1 oder 2,
dadurch gekennzeichnet,
daß der Spannkörper (2) einen Absatz mit einer Radialfläche (13) hat, auf welcher die Schwenkachse (8) des Hebels (7) angeordnet ist.

4. Vorrichtung nach Anspruch 3,
dadurch gekennzeichnet,
daß der Spannkörper (2) einen in Umfangsrichtung verlaufenden sowie auf Höhe der Anlagefläche (4) liegenden Einschnitt (14) hat, der von zwei Radialflächen (13) begrenzt ist, zwischen die der Hebel (7) mit seinem Innenarm (9) eintaucht.

5. Vorrichtung nach einem der Ansprüche 1 bis 4,
dadurch gekennzeichnet,
daß der Hebel (7) etwa C-förmig ist, wobei das freie Griffende (12) entgegen der C-Krümmung abgewinkelt ist.

6. Vorrichtung nach einem der Ansprüche 1 bis 5,
dadurch gekennzeichnet,
daß an dem Hebel (7) eine in Spannrichtung wirkende Feder (17) angreift.

7. Vorrichtung nach Anspruch 6,
dadurch gekennzeichnet,
daß die Feder (17) eine Zugfeder ist, die am Spannkörper (2) sowie am oder nahe dem Griffende (12) am Außenarm (11) des Hebels (7) angelenkt ist und sich im wesentlichen auf der dem Außenarm (11) des Hebels (7) abgelegenen Umfangsseite des Spannkörpers (2) erstreckt.

8. Vorrichtung nach Anspruch 7,
dadurch gekennzeichnet,
daß die Feder (17) teilweise in den Einschnitt (14) des Spannkörpers (2) eintaucht.

## Claims

1. Device for holding a saw blade (5) which is to be clamped at one end and which is movable to and fro, such as the blade of a jig saw, with a contact bearing face (4) which has adjoining or moulded-in positive locking contours in a clamping body (2) against which the clamping end of the saw blade (5) can be tensioned by means of a tension member (7) mounted on the clamping body (2) and an eccentric curve (10), characterised in that the tension member (7) is a double-armed lever with a shorter inner arm (9) and with a longer outer arm (11) curved in the circumferential direction of the clamping body and provided with a free grip end (12), that the swivel axis (8) of the tension member (7) is parallel with the lift axis of the clamping body (2) and that the eccentric curve (10) is mounted at the end side of the shorter inner arm (9) of the tension member (7) and in the clamping position directly biases the clamping end of the jig saw blade (5).

2. Device according to claim 1 characterised in that the clamping body (2) has a cylindrical sleeve form and the contact bearing face (4) lies roughly in a diametric plane of this sleeve form whereby the lever (7) is mounted opposite the contact bearing face (4) on the clamping body (2) close to the circumferential side.

3. Device according to claim 1 or 2 characterised in that the clamping body (2) has a ledge with a radial face (13) on which the swivel axis (8) of the lever (7) is mounted.

4. Device according to claim 3 characterised in that the clamping body (2) has a Circumferentially aligned incision (14) level with the contact bearing face (4) and defined by two radial surfaces (13) between which projects the lever (7) by its inner arm (9).

5. Device according to one of claims 1 to 4 characterised in that the lever (7) is approximately C-shaped wherein the free grip end (12) is angled opposite the C-curvature.

6. Device according to one of claims 1 to 5 characterised in that a spring (17) acting in the clamping direction engages on the lever (7).

7. Device according to claim 6 characterised in that the spring (17) is a tensile spring which is attached to the clamping body (2) as well as on or near the grip end (12) on the outer arm (11) of the lever (7) and extends substantially on the circumferential side of the clamping body (2) remote from the outer am (11) of the lever (7).

8. Device according to claim 7 characterised in that the spring (17) projects in part into the incision (14) of the clamping body (2).

## Revendications

1. Dispositif destiné à recevoir l'extrémité bloquable d'une lame (5) de scie, telle qu'une scie à guichet, par exemple, bloquable par une seule extrémité et mobile en va-et-vient, avec une surface de contact (4) présentant des contours adjacents ou formés en engagement géométrique, dans un corps de serrage (2), contre laquelle l'extrémité bloquable de la lame (5) de la scie peut être serrée à l'aide d'un organe de serrage (7) monté sur le corps de serrage et d'une courbe d'excentrique (10),
caractérisé en ce que
l'organe de serrage (7) est un levier à deux bras, dont le plus court est un bras interne (9) et le plus long un bras externe (11) incurvé dans le sens circonférentiel et pourvu d'une extrémité libre de préhension (12), et que l'axe de pivotement (8) de l'organe de serrage (7) est parallèle à l'axe de levée du corps de serrage (2) et que la courbe d'excentrique (10) est disposée à l'extrémité frontale du bras de levier le plus court (9) de l'organe de serrage (7), l'extrémité bloquable de la lame (5) de la scie étant soumise directement à l'influence de la courbe d'excentrique quand le dispositif est en position de serrage.

2. Dispositif selon la revendication 1,
caractérisé en ce que
le corps de serrage (2) présente la forme d'une gaine cylindrique et que la surface de contact (4) est située à peu près diamétralement par rapport à la gaine, le levier (7) étant monté sur le corps de serrage (2), à l'opposé de la surface de contact (4), à proximité de la surface circonférencielle du corps de serrage (2).

3. Dispositif selon la revendication 1 ou 2,
caractérisé en ce que
le corps de serrage (2) présente un gradin sur la surface radiale (13) duquel l'axe de pivotement (8) du levier (7) est disposé.

4. Dispositif selon la revendication 3,
caractérisé en ce que
le corps de serrage (2) présence une entaille (14) qui, disposée à la hauteur de la surface de contact (4), s'étend dans le sens circonférentiel et est limitée par deux surfaces radiales (13) entre lesquelles le bras interne (9) du levier s'engage.

5. Dispositif selon l'une des revendications 1 à 4,
caractérisé en ce que
le levier (7) présente approximativement la forme d'un C, l'extrémité libre de préhension (12) étant coudée inversement à la courbure du C.

6. Dispositif selon l'une des revendications 1 à 5,
caractérisé en ce que
le levier (7) est attaqué par un ressort (17) qui agit dans le sens de serrage.

7. Dispositif selon la revendication 6,
caractérisé en ce que
le ressort (17) est un ressort de traction qui est monté, articulé, sur le corps de serrage (2) ainsi que sur ou à proximité de l'extrémité de préhension (12) du bras externe (11) du levier (7) et s'étend sensiblement le long de la surface circonférentielle du corps de serrage (22) opposée au bras externe (11) du levier (7).

8. Dispositif selon la revendication 7,
caractérisé en ce que
le ressort (7) s'engage partiellement dans l'entaille (14) du corps de serrage (2).
